# EUROPEAN PATENT SPECIFICATION

(11) **EP 3 810 701 B1**
(45) Date of publication and mention of the grant of the patent: **19.10.2022**
(21) Application number: 19732526.9
(22) Date of filing: 06.06.2019
(51) Int. Cl.: C09D 5/00

(54) **PRIMER COMPOSITION**
GRUNDIERUNGSZUSAMMENSETZUNG
COMPOSITION D'APPRÊT

(30) Priority: 25.06.2018 US 201862689408 P
(43) Date of publication of application: 28.04.2021
(73) Proprietor: DDP Specialty Electronic Materials US, LLC, Wilmington, DE 19805 (US)
(72) Inventor: DEHNICKE, Stefan, Wilmington, DE 19805 (US); OSICHOW, Anna, Wilmington, DE 19805 (US); BECKER, Gerd, Wilmington, DE 19805 (US)
(74) Representative: Houghton, Mark Phillip
(86) International application number: PCT/US2019/035726
(87) International publication number: WO 2020/005492

(56) References cited:
- WO-A1-2015/053632
- DE-A1-102012 215 459
- DE-U1-202004 017 418
- US-A1- 2016 167 861
- US-A1- 2017 166 806

## Description

### FIELD

The present invention relates to a primer composition; and more specifically, the present invention relates to a primer composition incorporating a film formation and color indicator for determining the dryness of the primer.

### BACKGROUND

Primers with pigmentation like carbon black, zinc oxide or other pigments are commonly applied to a first substrate, such as metal, prior to bonding said first substrate to a dissimilar second substrate, such as rubber, using a bonding agent (also referred to as a cover cement or cover). Typically, pigmented primers applied to metal substrates, such as steel or aluminum, are usually grey; and when these known primers are applied to the surface of a metal, it is difficult to differentiate between a metal part coated with a primer (coated part) and a metal part that has not been coated with a primer (non-coated part). The use of a colored primer can facilitate a visual differentiation of a coated part from non-coated part; and consequently, improve the reliability of a bonding process using such colored primer. However, it is known that dyes used as additives in primers to provide color to the primers, can have a negative impact on the physical properties (for example viscosity) of the primer and on the bonding performance of primers.

In addition, a common mistake made during application of a cover to metal, which has been primed with a primer, is not allowing the primer to sufficiently dry before using the primer for part coating with a cover or directly for curing. An insufficient drying of the primer can lead to a high failure rate of the bonding of rubber to metal parts where significantly metal failure is observed. Thus, knowing the degree of dryness of a primer film before a cover is applied to a primer film layer by a user can reduce the failure rate of bonding dissimilar parts (e.g. rubber to metal parts) and improve the processing of bonding dissimilar parts together to form an internal bonded unit (or composite) such as a rubber-to-metal part.

US2017/166806 discloses a nanoemulsion optical material includes a polymer matrix and a plurality of nano-droplets, comprising an optically interactive material, directly dispersed within the polymer matrix. WO2015/053632 discloses road marking compositions that can be used in marking roads for improved visibility. DE102012215459 discloses a thermochromic dye and a latent heat storage agent. US2016/167861 discloses a terahertz wave transmission layer that is made of a material that transmits a terahertz wave; and an electric field enhancement structure that enhances an electric field by reacting with a predetermined frequency band of terahertz waves passing through the terahertz wave transmission layer. DE202004017418 discloses a colored granulate, for further processing as filler in molded objects or as coating for surfaces, comprises (in)organic colored pigments and at least one (in)organic binder. While dyes have previously been used as additives in primers to provide color to the primers, heretofore, a dye has not been used for color indication correlated to dryness which can provide a real-time, visual evaluation of a film's dryness. Nothing in the prior art mentions the use of a dye as a humidity indicator or a film dryness indicator in a primer composition useful, for example, in a rubber-to-metal bonding process. Thus, a color change which indicates the degree of dryness of the primer coating (or film) would be advantageous so as not to prematurely use a primer during a bonding process before the primer has fully dried.

### SUMMARY

To solve the problems of the prior art, the present invention provides a water-based primer composition including a suitable dye which can be used as a visual color indicator for primer film dryness without the dye having a negative impact on the physical properties and/or the performance of the primer.

Accordingly, one embodiment of the present invention is directed to a colored water-based primer composition; wherein the primer composition includes: (a) a water-based primer component; and (b) a film formation and dryness indicator dye component; wherein the dye present in the water-based primer composition is adapted for providing an indication of dryness during the drying process of the water-based primer composition, prior to using the primer composition in combination with a bonding agent for bonding two substrates together; and wherein the dye undergoes a visual color change when subjected to a predetermined drying temperature for visually determining the dryness of a primer film made from the water-based primer composition. The dye is advantageously used to visually determine the dryness of the primer film formed when the water-based primer composition containing the dye is applied to the surface of a substrate such as a metal substrate.

Another embodiment of the present invention is directed to a bonded article or composite unit made of two dissimilar substrates, such rubber-to-metal parts, wherein the bonded article includes the above water-based primer composition being applied to the surface of the metal substrate.

### BRIEF DESCRIPTION OF THE DRAWINGS

Figure 1 is a graphical illustration showing a drying curve (plotting dryness versus time) at room temperature for a water-based primer containing 5 percent (%) basacid red (Inventive Example 4) applied on a Bonder B sheet (199.5 cm²). The graph of Figure 1 shows that the original pink color of the primer, when wet, turns to a purple color when the primer is dry at greater than about 97 % dryness.
Figure 2 is a black and white photograph showing a dry film of a dried water-based primer containing 5 % basacid red (Inventive Example 4). The film is purple in color when dry.
Figure 3 is a black and white photograph showing the dry film of Figure 2 which has been treated with a water droplet forming a dark spot wherein the dark spot has turned from a purple color to a pink color.

### DETAILED DESCRIPTION

In general, a colored water-based primer composition useful for the formation of a primer film includes (a) a water-based primer compound or component; and (b) a dye compound or component; and (c) optionally, any other compound or additive.

The first component (a) of the water-based primer composition of the present invention includes (a) a water-based primer component. The primer component (a) useful in the present can be, for example, an adhesive dispersion, formulation or composition. For example, the adhesive composition used in the present invention can be the adhesive composition described in U.S. Patent No. 5,962,576. Exemplary of the adhesive composition described in the above patent can include a water-based adhesive containing (ai) an aqueous dispersion of (aiα) one or several phenolic resins, which has been stabilized by (aiβ) one or several polyacrylates, (aii) one or several latices of one or several halogenated polyolefins, and (aiii) one or several crosslinking agents. The halogenated polyolefin, component (aii), is preferably a water dilutable or emulsifiable as well as dispersible, polymeric film-forming agent. Pigments such as TiO₂ and/or SiO₂, and/or soot, may optionally be added to the adhesive, as component (aiv). Generally, the adhesive dispersion is free from organic solvents; and includes a mere content of < 5 weight percent (wt %) of low-molecular, hydroxyl containing organic compounds.

In one embodiment the adhesive dispersion composition, based on 100 parts of one or several halogenated polyolefins, component (aii), contains 0.1 part to 80 parts of one or several polyacrylates, component (aiβ); 50 parts to 500 parts of one or several phenolic resins, component (aiα); and 1 part to 100 parts of one or several cross-linking agents, component (aiii). "Parts" herein are meant to be parts by weight. A particularly high adhesive force of the adhesive can be achieved with the resulting adhesive composition above. The adhesive composition can also optionally include 30 parts to 300 parts pigment and/or soot, component (aiv). The dry matter content of the aqueous suspension can be from 17 wt % to 65 wt %.

In one embodiment, the water-based adhesive composition includes an aqueous dispersion, component (ai), of one or several phenolic resins, component (aia), which has been stabilized by one or several polyacrylates, component (aiβ); and water, component (aiy). The aqueous dispersion, component (aia), can be obtained by mixing one or several phenolic resins (aia), one or several polyacrylates (aiβ), and water (aiy). This aqueous dispersion is thus advantageously prepared without the use of an organic solvent. And, the aqueous dispersion can be prepared within a surprisingly short period and with very little effort.

In one embodiment, the phenolic resin, component (aia), useful in the water-based adhesive can include, for example, a condensation product of phenols with formaldehyde. With this heat-reactive phenolic resin good results are achieved with respect to the adhesiveness with a small content of low-molecular, hydroxyl-containing, organic compounds. In other embodiments, the phenolic resin useful in the adhesive can be a resol and/or a novolak resin. With this heat-reactive phenolic resin very good results are achieved with respect to the adhesiveness with a very small content of low-molecular, hydroxyl containing, organic compounds.

In one preferred embodiment, the phenolic resin, component (aia), useful in the water-based adhesive can include, for example, at least one phenolic resin that is hydrophobic. With the use of the hydrophobic phenolic resin, excellent results can be achieved with respect to the adhesiveness with a negligibly small content of low-molecular, hydroxyl-containing, organic compounds.

In one embodiment, the polyacrylate, component (aiβ), useful in the water-based adhesive composition may include an alkali or ammonium salt of a polyacrylic acid and/or a substituted polyacrylic acid. With the use of these polyacrylate dispersion-stabilizing polymers, excellent results can be achieved in the stabilization of the phenolic resin dispersion. Dispersing agents such as emulsifiers, cross-linking agents and/or de-foaming agents as well as polyvinyl acetate and/or partly saponified polyvinyl acetate may also be advantageously added to the adhesive composition.

The substituted polyacrylic acid useful as the polyacrylate, component (aiβ), can be a polymerizate or secondary product of monomers with the following general Formula (I): 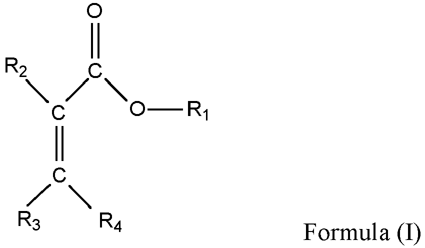 where in the above Formula (I), R₁ can be H, CH₃, alkyl C₂ to C₄, or aryl; R₂ can be H, OH, CN, CH₃, alkyl C₂ to Cs, F, Cl, or Br; and R₃ and R₄ can be H, CH₃, alkyl C₂ to Cs, aryl, O-CH₃, O-alkyl C₂ to Cs, or O-aryl.

The latex with one or several halogenated polyolefins, component (aii), useful in the water-based adhesive composition can be, for example, an emulsion copolymer of 2-chlorobutadiene and methacrylic acid. With these halogenated polyolefins the best results can be achieved for the adhesiveness and the film formation. The chlorine content, of the above emulsion copolymer, can be 35 % to 50 %, the content of comonomers is 0.1 % to 5 %, based on the solid polymer in the latex.

The cross-linking agent, component (aiii), useful in the water-based adhesive composition can be, for example, one or several oxides of one or several polyvalent metals. With these cross-linking agents, good results are achieved for the adhesiveness and the corrosion resistance. In one preferred embodiment, the cross-linking agent useful in the water-based adhesive composition can consists of one or several oxides of the metals Mg, Al, Ca, Zn, Zr, Cd and Pb. With these metal oxides very good results are achieved for the adhesiveness and the corrosion resistance.

The adhesive composition can also include a pigment and/or soot as component (aiv). For example, 30 parts to 300 parts pigment and/or soot can be added to the adhesive composition.

The adhesive composition may optionally contain one or more surfactants as component (av) to disperse one or more components of the adhesive composition; and the surfactant can be particularly useful when water is used as the carrier liquid. The surfactant may be any useful surfactant for dispersing one or more of the components such as an amphoteric, anionic, cationic, anionic or nonionic surfactant. Typically, the surfactant can be anionic, nonionic or mixture of these. Some suitable nonionic surfactants, for example, can be alkoxylates, copolymers of ethylene oxide and propylene oxide, and mixtures thereof. Among the suitable alkoxylates useful in the present invention, alkoxylates such as for example, ethoxylates, which have the following structure can be used:

R-O-(-CH₂CH₂O-)ₓ-H

where in the above structure, R is an aliphatic group, an aromatic group, an aliphatic-substituted aromatic group, an aromatic-substituted aliphatic group, or a mixture thereof; and x is a value of from 5 to 200. In some embodiments R can be an alkyl-substituted benzene, with the structure R1-R2-, where R1 can be a linear alkyl group and R2 can be an aromatic ring. One suitable nonionic surfactant useful in the present invention can be nonylphenol ethoxylate.

Among embodiments in which nonionic surfactant is used, some suitable amounts of nonionic surfactant are, for example, 1 wt % or more; or 5 wt % or more; or 8 wt % or more. Independently, among embodiments in which nonionic surfactant is used, some suitable amounts of nonionic surfactant are, for example, 30 wt % or less; or 20 wt % or less; or 15 wt % or less. In some embodiments, the amount of nonionic surfactant in the composition of the present invention in 0.1 wt % or less; or 0.01 wt % or less. The weights are dry weights in that preclude any weight of the carrier liquid or water.

In some embodiments, the adhesive composition contains one or more anionic surfactant. Among embodiments in which an anionic surfactant is used, some suitable amounts of anionic surfactant can be, for example, 1 wt % or more; or 5 wt % or more; or 8 wt % or more. Independently, among embodiments in which an anionic surfactant is used, some suitable amounts of anionic surfactant can be, for example, 30 wt % or less; or 20 wt % or less; or 15 wt % or less.

In some embodiments, the amount of anionic surfactant present in the composition of the present invention can be 0.1 wt % or less; or 0.01 wt % or less. In some embodiments, no anionic surfactant can be present.

Generally, the amount of the water-based primer compound, component (a), present in the water-based primer composition can be in the range of from 80 phr to 99.9 phr in one embodiment; from 90 phr to 99.5 phr in another embodiment; and from about 95 phr to about 97 phr in still another embodiment. "Parts", as used herein, is meant to be parts by weight.

To color the primer after preparing the water-based adhesive composition described above, a dye can be added to the adhesive composition as component (b). The dye present in the water-based primer composition is adapted for providing an indication of dryness during the drying process of the water-based primer composition prior to being used in a process for bonding two substrates together. In general, the dye undergoes a visual color change when subjected to a drying temperature for visually determining the dryness of a primer film made from the water-based primer composition.

There is a plethora of dyes known to those skilled in the art, and any dye can be used in the present invention so long as the dye provides a visual color change when subjected to a drying temperature for visually determining the dryness of a primer film made from the water-based primer composition. For example, dyes useful in the present invention can be any dye within the scope of the following general classes or types of dyes: acid dyes, natural dyes, basic (cationic) dyes, synthetic dyes, direct (substantive) dyes, disperse dyes, sulfur dyes, pigment dyes, mordant dyes, vat dyes, reactive dyes, macromolecular dyes, metallized dyes, naphthol dyes, premetallized dyes, gel dyeing, developed dyes, azo dyes, aniline dyes, anthraquinone dyes, and mixtures thereof. Not to limit the scope of the dyes useful in the present invention, in one preferred embodiment, the dye useful in the water-based primer composition can be any dye that is water-soluble. For example, the dye may include any one or more dyes within the scope of the following categories of dyes so long as the dye is water-soluble: azo dyes, diarylmethane dyes, triarylmethane dyes, acridine dyes, quinoline dyes, thiazole dyes, indophenol dyes, azin dyes, oxazine dyes, thiazine dyes, anthraquinone dyes, phthalocyanines, and mixtures thereof. Exemplary of dyes useful in the present invention may include any one or more dyes having the following general structures: nitroso, nitro, monoazo, diazo, stilbene, diarylmethane, triarylmethane, xanthene, acridine, quinoline, methine, thiazole, indamine, indophenol, azine, oxazine, thiazine, aminoketone, anthraquinone, indigoid, phthalocyanine, natural dyes, and mixtures thereof.

In one general embodiment, the colored water-based primer composition may contain at least one dye represented by the following Formula (II): 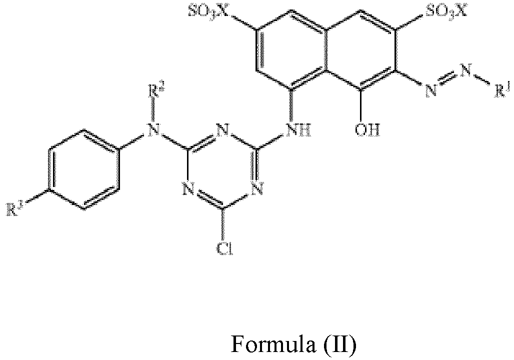 where in the above Formula(II), R¹ may be selected from the following Formulas (III) or (IV): 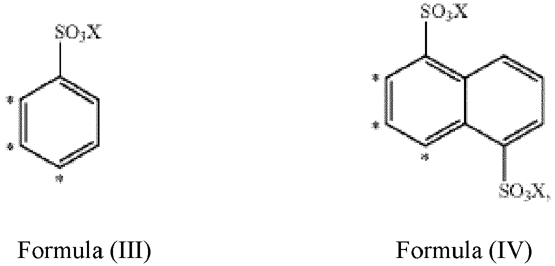 and where in the above Formula (II), R² is H, CH₃ or C₂H₅ and R³ is H or CH₃ or C₂H₅ or Formula V.

In another embodiment, the colored water-based primer composition may contain at least one dye represented by the following Formula (V): 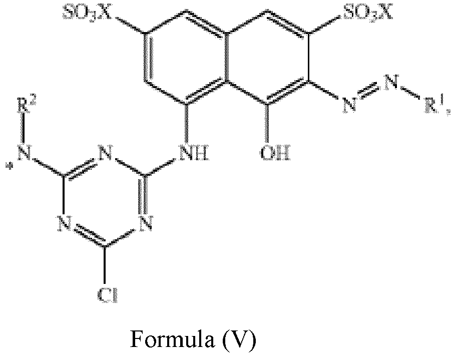 where in the above Formula (V), X denotes H, Li, Na, or K. In any of the Formulae above, possible binding sites are labeled with an asterisk.

In still another general embodiment, the dye compound useful in the present invention may include a reactive dye as defined by the following Formula (VI):

ABₙTₓMₓ Formula (VI)

where in the above Formula (VI), A is an organic chromophore, B is an electrophilic reactive group covalently bonded to A directly or through a linking group, T is an anionic group covalently linked to A, M is a cationic metal ion, n and X are each an integer of 1 to 10.

The group A is a chromophore, including azo such as monoazo, bisazo and polyazo including their complexes with Cr, Fe, Co, and Cu; phthalocyanine, anthraquinone, aza 18 annulene, formazan copper complex, triphenodioxazine, nitroso, nitro, diarylmethane, triarylmethane, xanthene, acridene, methine, thiazole, indamine, azine, oxazine, thiazine, quinoline, indigoid, indophenol, lactone, aminoketone, hydroxyketone, and stilbene chromophores. Preferably, the reactive dye incorporates an azo, phthalocyanine or anthraquinone chromophore group. The reactive dye moieties AB contain organic chromophore A and at least one electrophilic functional group B. When multiple functional groups are provided, it is often desirable that the groups vary in reactivity, to maximize conversion. Examples of electrophilic functional groups, which may be incorporated into the reactive dye include: monohalotriazine; dihalotriazine; monohalopyrimidine; dihalopyrimidine; trihalopyrimidine; dihaloquinoxaline; dihalopyridazone; dihalophthalazine; halobenzothiazole; mono-(m-carboxypyridinium)-triazine; amino epoxide; methylamino; sulfatoethyl sulfone; sulfatoethyl sulfonamide; chloroethyl sulfone; vinyl sulfone; phenylamino sulfone; acrylamide; alpha-haloacryloylamide; alpha, beta-dihalopropionyl amide; halosulfonyl pyrimidine; sulfatoethylamino sulfone; sulfatopropionamide; halosulfothiazinylamide and haloacetylamide. The halogen component may be selected from fluorine, chlorine and bromine. Preferably, the reactive dye incorporates an electrophilic functional group selected from monochlorotriazine, monofluorotriazine, dichlorotriazine, sulfatoethylsulfone, vinyl sulfone, 2,3-dichloroquinoxaline, and 2,4-difluor-5-chloropyrimidine groups. When there is more than one electrophilic reactive group present in a reactive dye, it is possible the two or more reactive groups are different to each other.

In yet another embodiment, some of the reactive dyes that may be used in the present invention are commercially available, and described in the Colour Index, 3rd Edition, the Society of Dyers and Colourists (1971) and in the available published literature. By way of example and not limitation, one or more of the following reactive dyes may be employed: C.I. Reactive Blue 2, C.I. Reactive Blue 4, C.I. Reactive Blue 5, C.I. Reactive Blue 7, C.I. Reactive Blue 15, C.I. Reactive Blue 19, C.I. Reactive Blue 27, C.I. Reactive Violet 3, C.I. Reactive Violet 5, C.I. Reactive Red 2, C.I. Reactive Red 24, C.I. Reactive Orange 4, C.I. Reactive Orange 13, C.I. Reactive Orange 16, C.I. Reactive Orange 78, C.I. Reactive Yellow 3, C.I. Reactive Yellow 13, C.I. Reactive Yellow 14, C.I. Reactive Yellow 17, and C.I. Reactive Yellow 95.

In one preferred embodiment, the dye can be at least one aqueous dye selected from the several dyes available as C.I. Reactive Red ## for example a basacid red 495 liquid (R.R. 24:1). It should be noted that abbreviated names of dyes may be used herein, such as "R.R. 24:1" which stands for "C.I. Reactive Red 24:1". The acronym "C.I." used herein stands for "Color Index".

For example, basacid red 495 liquid (R.R. 24:1) can be added in different concentrations to a finished water-based primer such as the formulation of Comparative Example A (as described in Example 1 herein below).

The amount of the dye compound, component (b), present in the water-based primer composition can be generally in the range of from 0.1 wt % to 20 wt % in one embodiment; from 0.5 wt % to 10 wt % in another embodiment; and from 3 wt % to 5 wt % in still another embodiment.

The water-based primer composition may be made by mixing the components of the composition in any suitable mixing method such as those known in the art. Exemplary methods include ball milling, attrition milling, ribbon blending, high shear mixing (e.g., colloid mills) and paddle mixing.

Once the water-based primer composition is made by mixing the components of the composition by the mixing methods known in the art, the primer composition can be subject to the following processing steps and conditions to form a film: For example, the primer composition can be applied to a metal substrate and then the thin film of primer formed on the substrate can be allowed to dry at room temperature (e.g., 20 °C - 25 °C) until the film is dry; or heat can be applied to the coated substrate at a higher temperature of, for example, from 40 °C to 80 °C to more quickly dry the film. Drying time at high temperatures may depend on factors such as the applied wet film thickness, the available air volume and the relative humidity. For example, at 80 °C a film with a thickness of about 20 µm may typically take about < 60 s to dry. In another embodiment, at 40 °C a film with a thickness of about 20 µm may typical take about 2- 3 min to dry. In addition, a primer can optionally be treated with an additive to increase the drying/prebaking of the film of up to about 130 °C. In general, a drying time of between a few seconds up to several minutes or hours are possible depending on temperature and film thickness of the primer.

The primer film of the present invention produced from the primer formulation as described above has some advantageous properties and benefits. The colored primer film is advantageously used to visually determine the dryness of the primer film formed when the water-based primer composition containing the dye is applied to the surface of a metal substrate. For example, some of the properties exhibited by the primer film include dryness indication as the primer undergoes a color change upon drying; corrosion resistance; and boiling water resistance using hot glycol at 100 °C for 7 days.

An adhesive composition, bonding agent or cover cement can be used for bonding two dissimilar substrates together to form a composite article. For example, a bonding agent formulation can be used to bond a rubber substrate to a metal substrate forming a rubber-to-metal composite product after the bonding agent is cured. Prior to placing a cover cement (or cover) to the two dissimilar substrates, the water-based primer composition of the present invention is applied to at least one of the substrates (usually the metal substrate); and then, the primer composition is allowed to dry to form a primer film on the substrate.

The water-based primer may be applied to the metal substrate by any suitable means such as spraying, dipping or brushing. The carrier liquid of the primer is then removed by any suitable method such as drying, which may be at ambient conditions or heated to a temperature below a temperature where the adhesive composition will react (vulcanize). Typical temperatures for applied and drying the primer may be from 20 °C to 130 °C, and preferably from 20 °C to 80 °C. Any suitable time may be used for the application of the primer; and such time is readily determined and exemplary times may be a few minutes to several days. To facilitate quicker drying a vacuum or a flowing atmosphere may be used.

The assemblage of the substrate, rubber, primer layer, and interposed adhesive composition can be visually examined and the dryness of the primer layer can be determined. After the primer layer is dry it can be used as one coat application or the cover layer will be applied and the assemblage is then heated to a temperature for a time to vulcanize the rubber and adhesive composition thereby bonding the rubber to the substrate. The temperature of vulcanization may be any suitable temperature depending on the rubber being used and desired properties, which is readily determined. The time likewise, may be any suitable time depending on the rubber used and desired properties. An applied pressure may also be employed as desired. Illustrative, typical temperatures for vulcanization are from 120 °C or 140 °C to 200 °C or 250 °C. The time at the vulcanization temperature may be for 2 seconds or 3 seconds or for several days depending on the particular application; and tends to depend on the size of the particular assemblage.

### EXAMPLES

The following examples are presented to further illustrate the present invention in detail but are not to be construed as limiting the scope of the claims. Unless otherwise stated all parts and percentages are by weight.

Various raw materials (ingredients) used in the examples which follow are explained herein below in Table I.

**Table I**

| Ingredient | Description | Supplier |
|---|---|---|
| Neoprene 115 | Polychloroprene latex (ca. 47 % in water): a copolymer latex of 2-chlorobutadiene and methacrylic acid | DuPont |
| Bakelite | Resol (H₂O < 5 wt%): a phenolic resol | Hexion |
| Igepal | Nonyl phenol ethoxylate: a nonionic surfactant | Solvay |
| Basacid Red 495 Liquid | Reactive Red 24:1: a monoazo dye | BASF |
| MEGUM W 9500 | Cover cement | The Dow Chemical Company |
| SMR 5 CV 60 | Natural rubber | Weber & Schaer |
| Naftolen ZD | Plasticizer | Chemetall |
| Ultrasil VN 3 | Silicon dioxide | Evonik |
| Carbon Black N 220 | Pigment | Evonik |
| Carbon Black N 330 | Pigment | Evonik |
| IPPD Vulkanox 4010 NA | N-Isopropyl-N'-phenyl-4-phenylenediamine | Lanxess |
| Rhenogran CBS | N-cyclohexyl-2-benzothiazyl sulfenamide | RheinChemie |

| Naftolen P 611 | Paraffinic mineral oil | Chemetall |
|---|---|---|
| Rhenogran MBT | Mercaptobenzothiazole | RheinChemie |
| Rhenogran MBTS | Dibenzothiazole disulfide | RheinChemie |

### Synthesis Example 1 - Preparation of Water-Based Primer Formulation

A water-based primer formulation used in the Inventive Examples and for preparing samples for testing, was prepared with ingredients described in Table I and the recipe described in Table II including (a) an aqueous polymer dispersion for film formation, (b) pigments for resistance properties, (c) surfactants for the stability and (d) a phenolic resin for the compatibility to the substrate. The water-based primer formulation was prepared according to the description in Example 1 of U.S. Patent No. 5,962,576.

**Table II - Water-Based Primer Formulation**

| Water-Based Primer | Comparative Example A |
|---|---|
| COMPONENTS | CONCENTRATION (g) |
| Copolymer latex of 2-chlorobutadiene and methacrylic acid | 16 |
| Resol (H₂O < 5 wt %), stabilized with sodium polyacrylate | 19 |
| ZnO | 1.5 |
| ZrO₂ | 2.2 |
| Surfactant | 0.35 |
| Carbon black | 1.2 |
| TiO₂ | 5.8 |
| Silicic acids | 1.6 |
| Deionized water | 52.35 |

### Inventive Examples 1-5 and Comparative Example A

### Colored Water-Based Primer

To facilitate a visual differentiation of a coated part from a non-coated part and to visual determine the dryness of the primer, a dye was added to the finished water-based primer formulation, referred to as "Comparative Example A" in Table (II), prepared above as described in Synthesis Example 1. A dye was used in Inventive Examples (Inv. Ex.) 1-5 and Comparative Example (Comp. Ex.) A shown in Table III. The dye used was an aqueous dye basacid red 495 liquid (R.R. 24:1). The basacid red 495 liquid (R.R. 24:1) was added in different concentrations to the finished water-based primer formulation, Comp. Ex. A. The different concentrations of dye used in the primer formulation are as described in Table III.

**Table III - Water-Based Primer Formulation Colored with Basacid Red**

| Example No. | Comp. Ex. A | Inv. Ex. 1 | Inv. Ex. 2 | Inv. Ex. 3 | Inv. Ex. 4 | Inv. Ex. 5 |
|---|---|---|---|---|---|---|
| Dye (Basacid Red 495 Liquid) concentration in Comp. Ex. A | 0% | 0.5 % | 1.5 % | 3 % | 5 % | 10% |

### Color Scale

To investigate the influence of the dye on the bonding performance of the primer various concentrations of dye were used, including dye concentrations of from 0 wt % up to 10 wt %, in the bonding tests. A low dye concentration of (e.g., 0.5 wt %) in the primer formulation is enough to color the water-based primer; and low concentrations of dye is preferred due to the possible negative influence of the dye on the bonding performance of the primer. The dried primer film, on the other hand, shows an intensive purple color with a dye concentration of more than 1.5 wt %.

### General Procedure for Testing Bonded Parts

Bonded composite parts of rubber and metal are pulled to destruction after curing (vulcanization) according to the tensile test procedure described in WDK Guideline 2000 (related to ASTM D 429 F); and the fracture pattern in the rubber was determined by visual assessment (herein designated as "%R").

To perform the two-coat bonding test in the Examples, standardized flat head screws, described in WDK Guideline 2000 (related to ASTM D 429 F), were first cleaned and then grit blasted. A metal substrate (e.g., a steel part) was preheated to a temperature of from 40 °C to 80 °C. The preheated metal surface was primed with test compounds (Comp. A and Inv. Ex. 1-5) by spraying the test compounds onto the surface of the steel parts to form a film layer of primer. The primer film layer had a thickness of about 8 µm to 15 µm. The primer layer was dried at 80 °C for 15 minutes. Then, the primed steel parts were coated with the cover, MEGUM W 9500, by spraying the cover onto the primer film to form an adhesive layer. The adhesive layer had a thickness of 15 µm to 25 µm. The adhesive layer with the primer layer was dried again at 80 °C for 8 minutes. The coated flat head screws were then bonded to a natural rubber substrate by transfer molding the rubber onto the coated metal parts at 160 °C (heated vulcanization press) for 10 minutes (NR 65) or for 8 minutes (NR 45). The rubber composition of the rubber substrates used in the Examples is described in Table IV. The characteristic tensile test was performed on the vulcanized parts after cooling over night at room temperature. The resultant bonding characteristics of the adhesive compositions are described in Table V.

**Table IV**

| Components | Rubber/NR Mixture 65 Shore A Content of Components (Parts by Weight) | Rubber/NR Mixture 45 Shore A Content of Components (Parts by Weight) |
|---|---|---|
| Natural rubber SMR 5 CV 60 | 100 | 100 |
| Stearic acid | 2,5 | 2,0 |
| ZnO | 5,0 | 5,0 |
| Naftolen ZD | 2,0 | -- |
| Ultrasil VN 3 | - | 2,0 |
| Carbon black N 220 | 50 | -- |
| Carbon black N 330 | -- | 25 |
| IPPD Vulkanox 4010 NA | 0,4 | 1,4 |
| Sulfur | 2,6 | 2,5 |
| Rhenogran CBS | 0,5 | - |
| Naftolen P 611 | -- | 6,0 |
| Rhenogran MBT | -- | 0,3 |
| Rhenogran MBTS | -- | 0,95 |

The test primer samples are Comp. Ex. A and Inv. Ex. 1-5; and the cover coat is MEGUM W 9500. The vulcanization conditions were as follows: NR (65 Shore A) = 10 minutes at 160 °C and NR (45 Shore A) = 8 minutes at 160 °C

Colored water-based primer in combination with MEGUM W 9500 as cover shows same bonding performance (fracture pattern and tensile strength) as the uncolored reference (Comp. Ex. A) with MEGUM W 9500. Even the primer with 10 % basacid red colorant (Inv. Ex. 5) shows comparable bonding performance as the uncolored reference without a negative impact.

The results of the tensile test performed on the test samples after cooling the samples over-night at room temperature are described in Table V.

**Table V - Two-Coat Bonding Test Results of Adhesive + Primer Samples**

| Example No. | Comp. Ex. A | Inv. Ex. 1 | Inv. Ex. 2 | Inv. Ex. 4 | Inv. Ex. 5 |
|---|---|---|---|---|---|
| Concentration of Dye | 0% | 0.5 % | 1.5 % | 5 % | 10% |

| Results | | | | | |
|---|---|---|---|---|---|
| Coefficients of adhesion [MPa] NR 65 (65 Shore A) | 11.4 | 10.7 | 10.9 | 11.3 | 11.5 |
| Fracture pattern in rubber [%R] NR 65 (65 Shore A) | 98 | 99 | 99 | 98 | 98 |
| Coefficients of adhesion [MPa] NR 45 (45 Shore A) | 11.6 | 11.9 | 10.4 | 11.0 | 11.1 |
| Fracture pattern in rubber [%R] NR 45 (45 Shore A) | 98 | 98 | 96 | 96 | 97 |

### Color Indication for Film Dryness

The freshly applied primer formulation is a pink color or a pink-violet color when the primer is still wet. Once the colored primer starts to dry a color change is visually observed and the observation is from a pink color to purple color.

To perform the color indication for film dryness test, commercially available test strips and sheets were used including metal DIN strips (15 cm²) and metal Bonder B sheets (199.5 cm²). The DIN strips were cleaned and grit blasted. The Bonder B sheets were cleaned with solvent methyl isobutyl ketone (MIBK). The metal surfaces were preheated to 70 °C; and then the preheated metal surface was primed with the primer of Inv. Ex. 4 (dye = 5 % basacid red) by spraying the primer formulation onto the preheated metal surface to form a primer layer. The primer layer was dried at room temperature. Typically, water-based primers are dried at a higher temperature (e.g., from 40 °C to 130 °C, and preferably from 40 °C to 80 °C). However, drying the water-based primer layer at such a high temperature would be too fast to achieve a color change indication in the primer layer and the weighing until constant weight at the same time. And, as the primer layer goes through the drying process, the weight of the primer layer is monitored and recorded until the weight of the primer layer became constant i.e., no further change in weight is observed.

A DIN strip and Bonder B sheet parts were weighed over a period of time until a constant weight was measured; and the color change of the DIN strip was visually monitored. Both parts were weighed again after 24 hours. The weight of the DIN strip and bonder sheet parts, after 24 hours, was used as a 100 % dried reference.

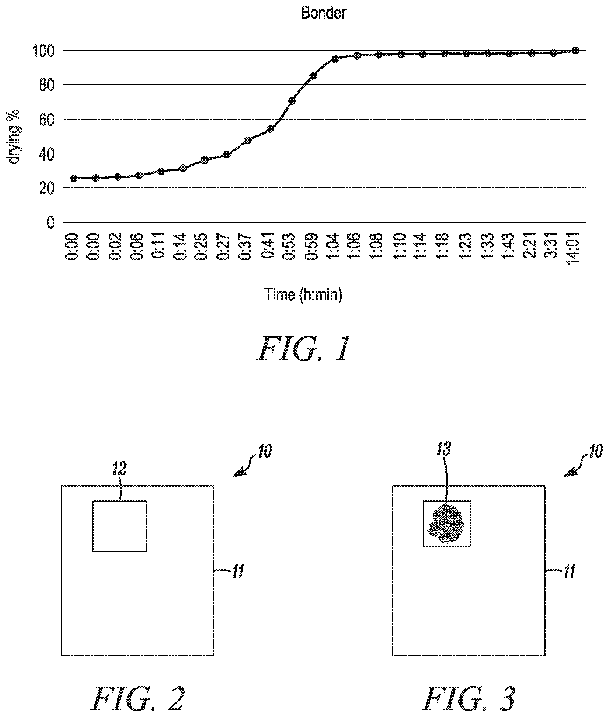

The drying test on a small DIN strip (15 cm²) versus on a big Bonder sheet (199.5 cm²) shows a complete color change from pink to purple at a 97.9 % dryness for the DIN strip and a complete color change from pink to purple at a 97.3 % dryness for the bonder sheet. Figure 1 shows the drying curve (% dryness versus time) of the Bonder sheet where the original color of the primer is pink (indicated by arrow A) which changes into the color purple (indicated by arrow B).

The observed color change, during the drying tests, indicates a primer dryness of about 98 % which is a sufficient dryness for a further cover application. Hence, the dye functions well in the film primer as a color indication for the film's dryness (also can be referred to a "moisture indicator" or "humidity indicator"); and the dye provides a real-time, visual measurement of dryness.

It is theorized that the color change most likely comes from the dye being embedded in a filled polymer matrix during the drying process. As shown in Figures 2 and 3, the color of the bonder sheet 11 can change back from a purple color to a pink-violet color in only a few seconds after treating the dried surface area (indicated by numeral 12 in Figure 2) with a water droplet (indicated by numeral 13 in Figure 3).

### Color Comparison of Drying at Different Temperatures

Several Bonder B sheets were cleaned with MIBK and dried at room temperature. The preheated (70 °C) metal sheets were primed with a reference formulation (Comp. Ex. A) and formulations containing colored compounds (Inv. Ex. 4 and Inv. Ex. 5) by a spraying application. Some of the primer layers were dried at room temperature (about 25 °C) and some of the primer layers were dried at 80 °C for 2 minutes in an oven.

For both of the above drying temperatures, the same color change from pink-violet (wet sample) to purple (dried sample) was observed. It was concluded that the drying temperature from room temperature to 80 °C does not influence the color of the dried primer.

## Claims

1. A water-based primer composition comprising a mixture of:
(a) a water-based primer component, being a water-based adhesive composition including:
(i) an aqueous dispersion of at least one phenolic resin which is a condensation product of a phenol and formaldehyde, wherein the aqueous dispersion is stabilized by at least one polyacrylate which consists of a monomer of the following Formula: (I): 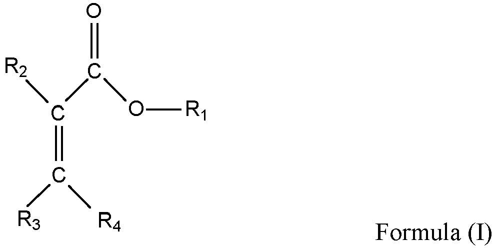 wherein, R₁ is H, CH₃, alkyl C₂ to C₄, or aryl; R₂ is H, OH, CN, CH₃, alkyl C₂ to Cs, F, Cl, or Br; and R₃ and R₄ is H, CH₃, alkyl C₂ to Cs, aryl, O-CH₃, O-alkyl C₂ to Cs, or O-aryl;
(ii) a latice formed from at least one halogenated polyolefin; and
(iii) at least one metal oxide as a cross linking agent; and
(b) a dye; wherein the dye is adapted for providing an indication of dryness of a primer film made from the water-based primer composition during the process of drying the water-based primer composition before use of the primer film; and wherein the dye undergoes a visual color change when subjected to a drying temperature for visually determining the dryness of the primer film made from the water-based primer composition.

2. The composition of claim 1, wherein the water-based adhesive contains per 100 parts of one halogenated polyolefin, 0.1 to 80 parts of at least one polyacrylate; 50.0 to 500 parts of at least one phenolic resin; and 1.0 to 100 parts of at least one cross-linking agent.

3. The composition of claim 1, wherein the polyacrylate of the water-based adhesive is an alkali or ammonium salt of a polyacrylic acid and/or a substituted polyacrylic acid.

4. The composition of claim 1, wherein the crosslinking agent of the water-based adhesive consists of at least one oxide of a metal selected from the group consisting of Mg, Al, Ca, Zn, Zr, Cd and Pb.

5. The composition of claim 1, wherein the dye component (b) comprises at least one dye selected from the group consisting essentially of: C.I. Reactive Red 24, C.I. Reactive Red 24:1, C.I. Reactive Red 141, C.I. Reactive Red 245; C.I. Reactive Yellow 95, C.I. Reactive Yellow 2, C.I. Reactive Blue 72, and C.I. Reactive Blue 15:1.

6. The composition of claim 1, wherein the dye component (b) is basacid red 495 liquid.

7. The composition of claim 1, wherein the dye component (b) is a dye having the following Formula (VI):
ABₙTₓMₓ Formula (VI)
where in the above Formula (VI), A is an organic chromophore, B is an electrophilic reactive group covalently bonded to A directly or through a linking group, T is an anionic group covalently linked to A, M is a cationic metal ion, n and X are integer of 1 to 10.

8. The composition of claim 1, wherein the concentration of the primer component (a) is from 10 parts by weight to 99.95 parts by weight; and the concentration of the dye component (b) is from 0.05 parts by weight to 90 parts by weight.

9. A primer film made from the composition of claim 1.

10. A method of priming a substrate comprising the step of coating said substrate with the water-based primer composition of claim 1.

11. A primer film made by the method of claim 10.

12. A method of making a rubber to substrate composite, comprising the steps of:
(a) coating said substrate with the water-based primer composition of claim 1 to form a primer film layer on the substrate;
(b) coating the primer film layer with a cover cement upon the primer film layer indicating that the film is dry based on a color change of the primer film; and
(c) bonding the substrate to rubber under vulcanization.

13. A rubber to substrate composite made by the method of claim 12.

14. The composite of claim 13, wherein the substrate is metal or a polymer.

15. The composite of claim 14, wherein the metal is steel or aluminum, and the polymer is a polyamide or a polyester.

## Patentansprüche

1. Grundierungszusammensetzung auf Wasserbasis umfassend eine Mischung von:
(a) einer Grundierungskomponente auf Wasserbasis, die eine Klebstoffzusammensetzung auf Wasserbasis ist, umfassend:
(i) eine wässrige Dispersion von mindestens einem phenolichen Harz, das ein Kondensationsprodukt eines Phenols und Formaldehyds ist, wobei die wässrige Dispersion durch mindestens ein Polyacrylat stabilisiert ist, das aus einem Monomer der folgenden Formel besteht: (I): 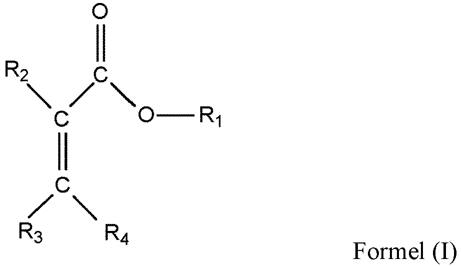 wobei R₁ H, CH₃, C₂ an C₄-Alkyl oder Aryl ist; R₂ H, OH, CN, CH₃, C₂ an Cs-Alkyl, F, Cl oder Br ist; und R₃ und R₄ H, CH₃, C₂ an Cs-Alkyl, Aryl, O-CH₃, O-Alkyl C₂ an C₈ oder O-Aryl ist;
(ii) ein Gitter, das aus mindestens einem halogenierten Polyolefin gebildet ist; und
(iii) mindestens ein Metalloxid als Vernetzungsmittel; und
(b) einem Farbstoff; wobei der Farbstoff geeignet ist, einen Hinweis auf Trockenheit eines Grundierungsfilms, der aus der Grundierungszusammensetzung auf Wasserbasis hergestellt ist, während des Verfahrens des Trocknens der Grundierungszusammensetzung auf Wasserbasis vor der Verwendung des Grundierungsfilms bereitzustellen; und wobei der Farbstoff eine visuelle Farbänderung durchmacht, wenn er einer Trocknungstemperatur unterworfen wird, zum visuellen Bestimmen der Trockenheit des Grundierungsfilms, der aus der Grundierungszusammensetzung hergestellt ist.

2. Zusammensetzung nach Anspruch 1, wobei der Klebstoff auf Wasserbasis, pro 100 Teile eines halogenierten Polyolefins, 0,1 bis 80 Teile mindestens eines Polyacrylats, 50,0 bis 500 Teile mindestens eines phenolischen Harzes und 1,0 bis 100 Teile mindestens erstens eines Vernetzungsmittels enthält.

3. Zusammensetzung nach Anspruch 1, wobei das Polyacrylat des Klebstoffs auf Wasserbasis ein Alkali- oder Ammoniumsalz einer Polyacrylsäure und/oder einer substituierten Polyacrylsäure ist.

4. Zusammensetzung nach Anspruch 1, wobei das Vernetzungsmittel des Klebstoffs auf Wasserbasis aus mindestens einem Oxid eines Metalls besteht ausgewählt aus der Gruppe bestehend aus Mg, Al, Ca, Zn, Zr, Cd und Pb.

5. Zusammensetzung nach Anspruch 1, wobei die Farbstoffkomponente (b) mindestens einen Farbstoff umfasst ausgewählt aus der Gruppe bestehend im Wesentlichen aus: C.I. Reaktiv Rot 24, C.I. Reaktiv Rot 24:1, C.I. Reaktiv Rot 141, C.I. Reaktiv Rot 245; C.I. Reaktiv Gelb 95; C.I. Reaktiv Gelb 2, C.I. Reaktiv Blau 72 und C.I. Reaktiv Blau 15:1.

6. Zusammensetzung nach Anspruch 1 wobei die Farbstoffkomponente (b) Basacid Rot 495 flüssig ist.

7. Zusammensetzung nach Anspruch 1, wobei die Farbstoffkomponente (b) ein Farbstoff ist, der die folgende Formel (VI) aufweist:
ABₙTₓMₓ Formel (VI)
wobei in der obigen Formel (VI) A ein organisches Chromophor ist, B eine elektrophile reaktive Gruppe ist, die kovalent an A direkt oder durch eine Verknüpfungsgruppe gebunden ist, T eine anionischen Gruppe ist, die kovalent mit A verknüpft ist, M ein kationisches Metallion ist, n und X ganze Zahlen von 1 bis 10 sind.

8. Zusammensetzung nach Anspruch 1, wobei die Konzentration der Grundierungskomponente (a) von 10 Gewichtsteilen bis 99,95 Gewichtsteilen reicht; und die Konzentration der Farbstoffkomponente (b) von 0,05 Gewichtsteilen bis 99 Gewichtsteilen reicht.

9. Grundierungsfilm, der aus der Zusammensetzung nach Anspruch 1 hergestellt ist.

10. Verfahren zum Grundieren eines Substrats umfassend den Schritt des Beschichtens des Substrats mit der Grundierungszusammensetzung auf Wasserbasis nach Anspruch 1.

11. Grundierungsfilm, der durch das Verfahren nach Anspruch 10 hergestellt wird.

12. Verfahren zum Herstellen eines Kautschuk-an-Substrat-Verbundstoffs, umfassend die Schritte des:
(a) Beschichtens des Substrats mit der Grundierungszusammensetzung auf Wasserbasis nach Anspruch 1, um eine Grundierungsfilmschicht auf dem Substrat zu bilden;
(b) Beschichtens der Grundierungsfilmschicht mit einem Bedeckungszement auf der Grundierungsfilmschicht, die aufgrund einer Farbänderung des Grundierungsfilms anzeigt, dass der Film trocken ist; und
(c) Bindens des Substrats an Kautschuk unter Vulkanisieren.

13. Kautschuk-an-Substrat-Verbundstoff, der durch das Verfahren nach Anspruch 12 hergestellt wird.

14. Verbundstoff nach Anspruch 13, wobei das Substrat Metall oder ein Polymer ist.

15. Verbundstoff nach Anspruch 14, wobei das Metall Stahl oder Aluminium ist und das Polymer ein Polyamid oder ein Polyester ist.

## Revendications

1. Composition d'amorce à base d'eau comprenant un mélange de :
(a) un constituant d'amorce à base d'eau, étant une composition adhésive à base d'eau comprenant :
(i) une dispersion aqueuse d'au moins une résine phénolique qui est un produit de condensation d'un phénol et de formaldéhyde, dans laquelle la dispersion aqueuse est stabilisée par au moins un polyacrylate qui est constitué d'un monomère de la Formule suivante : (I) : 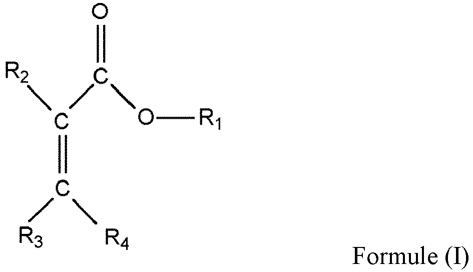 dans laquelle R₁ est H, CH₃, alkyle en C₂ à C₄, ou aryle ; R₂ est H, OH, CN, CH₃, alkyle en C₂ à Cs, F, Cl ou Br ; et R₃ et R₄ est H, CH₃, alkyle en C₂ à Cs, aryle, O-CH₃, O-alkyle en C₂ à Cs, ou O-aryle ;
(ii) un réseau formé à partir d'au moins une polyoléfine halogénée ; et
(iii) au moins un oxyde métallique comme agent de réticulation ; et
(b) une teinture ; dans laquelle la teinture est adaptée pour fournir une indication du caractère sec d'un film d'amorce fabriqué à partir de la composition d'amorce à base d'eau durant le procédé de séchage de la composition d'amorce à base d'eau avant l'utilisation du film d'amorce ; et dans laquelle la teinture subit un changement de couleur visuel lorsque soumise à une température de séchage pour la détermination visuelle du caractère sec du film d'amorce fabriqué à partir de la composition d'amorce à base d'eau.

2. Composition selon la revendication 1, dans laquelle l'adhésif à base d'eau contient pour 100 parties d'une polyoléfine halogénée, de 0,1 à 80 parties d'au moins un polyacrylate; de 50,0 à 500 parties d'au moins une résine phénolique; et de 1,0 à 100 parties d'au moins un agent de réticulation.

3. Composition selon la revendication 1, dans laquelle le polyacrylate de l'adhésif à base d'eau est un sel alcalin ou d'ammonium d'un poly(acide acrylique) et/ou d'un poly(acide acrylique) substitué.

4. Composition selon la revendication 1, dans laquelle l'agent de réticulation de l'adhésif à base d'eau est constitué d'au moins un oxyde d'un métal sélectionné dans le groupe constitué de Mg, Al, Ca, Zn, Zr, Cd et Pb.

5. Composition selon la revendication 1, dans laquelle le constituant de teinture (b) comprend au moins une teinture sélectionnée dans le groupe constitué essentiellement du : rouge réactif C.I. 24, rouge réactif C.I. 24 :1, rouge réactif C.I. 141, rouge réactif C.I. 245 ; jaune réactif C.I. 95, jaune réactif C.I. 2, bleu réactif C.I. 72, et du bleu réactif C.I. 15 :1.

6. Composition selon la revendication 1, dans laquelle le constituant de teinture (b) est le liquide rouge acide de base 495.

7. Composition selon la revendication 1, dans laquelle le constituant de teinture (b) est une teinture ayant la Formule (VI) suivante :
ABₙTₓMₓ Formule (VI)
où dans la Formule (VI) ci-dessus, A est un chromophore organique, B est un groupe réactif électrophile lié de manière covalente à A directement ou à travers un groupe de liaison, T est un groupe anionique lié de manière covalente à A, M est un ion métallique cationique, n et X sont un nombre entier d'une valeur de 1 à 10.

8. Composition selon la revendication 1, dans laquelle la concentration du constituant d'amorce (a) est de 10 parties en poids à 99,95 parties en poids ; et la concentration du constituant de teinture (b) est de 0,05 partie en poids à 90 parties en poids.

9. Film d'amorce fabriqué à partir de la composition selon la revendication 1.

10. Procédé d'amorçage d'un substrat comprenant l'étape de revêtement dudit substrat avec la composition d'amorce à base d'eau selon la revendication 1.

11. Film d'amorce fabriqué par le procédé selon la revendication 10.

12. Procédé de fabrication d'un composite caoutchouc à substrat, comprenant les étapes de :
(a) revêtement dudit substrat avec la composition d'amorce à base d'eau selon la revendication 1 pour former une couche de film d'amorce sur le substrat ;
(b) revêtement de la couche de film d'amorce avec un ciment de recouvrement par-dessus la couche de film d'amorce indiquant que le film est sec sur la base d'un changement de couleur du film d'amorce ; et
(c) liaison du substrat au caoutchouc sous vulcanisation.

13. Composite caoutchouc à substrat fabriqué par le procédé selon la revendication 12.

14. Composite selon la revendication 13, dans lequel le substrat est un métal ou un polymère.

15. Composite selon la revendication 14, dans lequel le métal est l'acier ou l'aluminium, et le polymère est un polyamide ou un polyester.
